# EUROPÄISCHE PATENTSCHRIFT

(11) **EP 2 030 915 B1**
(45) Veröffentlichungstag und Bekanntmachung des Hinweises auf die Patenterteilung: **19.10.2011**
(21) Anmeldenummer: 08014526.1
(22) Anmeldetag: 14.08.2008
(51) Int. Cl.: B65D 85/804, A47J 31/36

(54) **Kapsel für eine Vorrichtung zur Erzeugung von flüssigen Lebensmitteln, insbesondere Kaffee**
Capsule for a device for creating liquid food, in particular coffee
Capsule pour dispositif de production d'aliments liquides, en particulier de café

(30) Priorität: 30.08.2007 DE 102007041093
(43) Veröffentlichungstag der Anmeldung: 04.03.2009
(73) Patentinhaber: GVB Gesellschaft für Vermögensberatungen AG, 6052 Hergiswil (CH)
(72) Erfinder:
(74) Vertreter: Ege, Guido

(56) Entgegenhaltungen:
- EP-A1- 0 615 921
- EP-A1- 1 704 803
- WO-A1-02/074661
- WO-A1-2007/093355

## Beschreibung

Die Erfindung betrifft eine Kapsel für eine Vorrichtung zur Erzeugung von flüssigen Lebensmitteln, insbesondere für Kaffeemaschinen, nach dem Oberbegriff des Anspruchs 1.

Kapseln für Vorrichtungen zur Erzeugung von flüssigen Lebensmitteln sind bereits bekannt, wobei in der Kapsel eine Kammer zur Aufnahme einer Substanz ausgebildet ist. Die Kapsel weist einen Filter, sowie einen Einlaufverschluss und einen Auslaufverschluss auf, wobei über den Einlaufverschluss Flüssigkeit in die Kammer geleitet werden kann, so dass aus der Substanz und der eingeleiteten Flüssigkeit das gewünschte flüssige Lebensmittel entsteht und anschließend das flüssige Lebensmittel aus der Kammer durch den Filter zu dem Auslaufverschluss und einer damit verbundenen Auslauföffnung der Kapsel geleitet werden kann.

Insbesondere zur Zubereitung von Kaffee werden solche Kapseln verwendet, in dem in der Kammer Kaffeepulver oder Kaffeegranulat gelagert wird und durch Zuführung von heißem Wasser Kaffee erzeugt wird.

Zur Erzeugung der flüssigen Lebensmittel sind Vorrichtungen bekannt, welche ein Flüssigkeitsbehälter, eine Pumpe, sowie einen Einlaufanschluss und eine Aufnahme für eine Kapsel mit mindestens einem Einlaufverschluss aufweisen. Die Kapsel wird in die Aufnahme eingelegt, wobei die Aufnahme derart ausgeführt ist, dass bei eingelegter Kapsel der Einlaufanschluss der Vorrichtung und der Einlaufverschluss der Kapsel miteinander verbunden sind, so dass mittels der Pumpe Flüssigkeit aus dem Flüssigkeitsbehälter über den Einlaufanschluss zu dem Einlaufverschluss und damit in die Kammer der Kapsel eingebracht werden kann.

WO 2007/093355 A1 offenbart eine Vorrichtung und eine Kapsel gemäß dem Oberbegriff des Anspruchs 1 zur Herstellung eines Getränks, wobei die Kapsel zwei verschiedene Kammern zur Aufnahme zwei unterschiedlicher Getränkepulver aufweist und die Vorrichtung zwei hydraulisch getrennte Flusswege zur Herstellung des Getränks aufweist, die jeweils einer der beiden Kammern zugeordnet sind.

Solche Vorrichtungen finden insbesondere als Kaffeemaschinen Verwendung, wobei zwischen Flüssigkeitsbehälter und Einlaufanschluss bei solchen Kaffeemaschinen ein Erhitzer vorgeschaltet ist, so dass heißes Wasser in die Kapsel zur Herstellung von Kaffee eingeleitet werden kann.

Der vorliegenden Erfindung liegt die Aufgabe zu Grunde, die bekannte Kapsel und die bekannte Vorrichtung zur Erzeugung von flüssigen Lebensmitteln dahingehend zu verbessern, dass eine größere Variabilität bei der Herstellung der flüssigen Lebensmitteln erreicht wird.

Gelöst ist diese Aufgabe durch eine Kapsel gemäß Anspruch 1. Vorteilhafte Ausgestaltungen der erfindungsgemäßen Kapsel finden sich in den Ansprüchen 2 bis 7.

In der erfindungsgemäßen Kapsel ist somit mindestens eine erste Kammer zur Aufnahme einer ersten Substanz zur Herstellung des flüssigen Lebensmittels ausgebildet. Die Kapsel weist mindestens einen ersten Filter, mindestens einen ersten Einlaufverschluss und mindestens einen ersten Auslaufverschluss auf, welche derart angeordnet sind, dass über den ersten Einlaufverschluss Flüssigkeit in die erste Kammer zuführbar und aus der ersten Kammer durch den ersten Filter Flüssigkeit über den ersten Auslaufverschluss abführbar ist.

Der Filter erfüllt hierbei die Funktion, dass keine oder nur vernachlässigbar wenig Substanz aus der Kammer mit der Flüssigkeit über den Auslaufverschluss abgeführt wird.

Wesentlich ist, dass bei der erfindungsgemäßen Kapsel mindestens eine zweite Kammer zur Aufnahme einer zweiten Substanz ausgebildet ist. Hierdurch ist es möglich, dass zwei unterschiedliche Substanzen in jeweils einer Kammer der Kapsel gelagert werden, so dass die Substanzen sich nicht vermischen.

Dies ermöglicht eine größere Variabilität bei der Herstellung von flüssigen Lebensmitteln mittels einer Kapsel, da nun zwei oder mehr verschiedene Substanzen jeweils in einer Kammer der Kapsel angeordnet werden können, so dass bei der Zubereitung des flüssigen Lebensmittel auf unterschiedliche Substanzen zurückgegriffen werden kann.

Beispielsweise kann bei einer Kapsel mit zwei Kammern die erste Kammer Kaffeepulver und die zweite Kammer Milchpulver enthalten. Mit solch einer Kapsel kann somit Milchkaffee oder je nach Ausgestaltung des Milchpulvers Cappuccino hergestellt werden, wobei der Benutzer lediglich eine Kapsel in eine entsprechende Kaffeemaschine einlegen muss und dennoch ein Getränk aus zwei Komponenten erhält.

Selbstverständlich sind beliebige weitere Kombinationen von flüssigen Lebensmitteln aus mehreren Komponenten, insbesondere auch aus mehr als zwei Komponenten bei Realisierung von mehr als zwei Kammern mit der erfindungsgemäßen Kapsel realisierbar.

Weiterhin ist die erste Kammer über der zweiten Kammer angeordnet und die Kapsel umfasst eine Auslaufkammer mit einer Auslauföffnung. Die Auslaufkammer ist an der zweiten Kammer angeordnet oder durchdringt die zweite Kammer hinsichtlich ihrer Höhe. Beide Kammern sind mit der Auslaufkammer verbunden, so dass die Flüssigkeit sowohl aus der ersten, als auch aus der zweiten Kammer in die Auslaufkammer abführbar ist und von dort über die Auslauföffnung aus der Kapsel ausgegeben wird.

Dies stellt einen besonders robusten Aufbau dar und zum anderen kann die erste Kammer ähnlich bereits bekannten Kapseln zur Zubereitung von Kaffee ausgebildet werden, so dass dort bereits bekannte vorteilhafte geometrische Abmessungen und Ausgestaltungen für die erfindungsgemäße Kapsel übernommen werden können.

Zusätzlich und/oder alternativ zu der zuvor genannten Durchdringung der zweiten Kammer durch die erste Kammer weist die Kapsel mindestens einen zweiten Auslaufverschluss auf, welcher mit der zweiten Kammer verbunden ist. Hier wird die Flüssigkeit somit bei jeder Kammer aus einem eigenen Auslaufverschluss abgeführt. Dies ist insbesondere dann vorteilhaft, wenn beispielsweise die Auslaufverschlüsse derart ausgebildet sind, dass sie mittels dem in der Kammer herrschenden Flüssigkeitsdruck geöffnet werden, denn durch die Ausbildung von zwei Auslaufverschlüssen können unterschiedliche Maximaldrücke für die beiden Kammern festgelegt werden, bei denen sich die jeweiligen Auslaufverschlüsse öffnen.

Weiterhin weist die Kapsel eine Auslauföffnung auf, welche sowohl mit dem ersten, als auch mit dem zweiten Auslaufverschluss verbunden ist, so dass lediglich an einem Ort flüssige Lebensmittel aus der Kapsel austreten.

Vorteilhafterweise ist die zweite Kammer der erfindungsgemäßen Kapsel mit dem ersten Einlaufverschluss verbunden. Auf diese Weise kann über den ersten Einlaufverschluss sowohl Flüssigkeit in die erste Kammer, als auch in die zweite Kammer zugeführt werden.

Diese Ausgestaltung weist den Vorteil auf, dass die Kapsel in herkömmlichen Vorrichtungen zur Erzeugung von flüssigen Lebensmitteln, welche typischerweise nur einen Einlaufverschluss mit Flüssigkeit beaufschlagen, verwendet werden kann. Allerdings können beide Substanzen nicht wahlweise mit Flüssigkeit beaufschlagt werden, da nur ein Einlaufverschluss zur Verfügung steht.

In einer weiteren vorteilhaften Ausgestaltung weist die Kapsel mindestens einen zweiten Einlaufverschluss auf, welcher mit der zweiten Kammer verbunden ist. Über den zweiten Einlaufverschluss kann Flüssigkeit in die zweite Kammer zugeführt werden.

In dieser vorteilhaften Ausgestaltung kann die Flüssigkeit somit gleichzeitig oder zeitlich versetzt über den ersten Einlaufverschluss in die erste Kammer und über den zweiten Einlaufverschluss in die zweite Kammer zugeführt werden, so dass sich eine größere Anzahl von Gestaltungsmöglichkeiten bei der Zubereitung des flüssigen Lebensmittels ergeben. Beispielsweise kann bei dem oben erwähnten Beispiel zunächst die zweite, mit Milchpulver befüllte Kammer mit Flüssigkeit beaufschlagt werden, so dass Milch oder Milchschaum erzeugt wird und anschließend in einem nachgelagerten zweiten Schritt kann die erste, mit Kaffeepulver befüllte Kammer mit Flüssigkeit beaufschlagt werden, so dass Kaffee erzeugt wird und auf den bereits erzeugten Milchschaum ausgegeben wird. Dies ermöglicht insbesondere die Herstellung von schichtartigen flüssigen Lebensmitteln, wie beispielsweise Latte Macchiato.

In einer vorteilhaften Ausgestaltung sind sowohl die erste, als auch die zweite Kammer mit dem ersten Auslaufverschluss verbunden, so dass sowohl aus der ersten Kammer, als auch aus der zweiten Kammer Flüssigkeit über den ersten Auslaufverschluss abführbar ist. Dies weist den Vorteil auf, dass sowohl das mittels der ersten Substanz hergestellt Lebensmittel, als auch das mittels der zweiten Substanz hergestellt Lebensmittel durch einen Auslaufverschluss abgeführt werden kann und dass insbesondere bei der Herstellung der Kapsel lediglich ein Auslaufverschluss ausgebildet werden muss.

Vorteilhafterweise weist die Kapsel mindestens einen zweiten Filter auf, welcher derart angeordnet ist, dass aus der zweiten Kammer durch den zweiten Filter Flüssigkeit über einen mit der zweiten Kammer verbundenen Auslaufverschluss abführbar ist.

Die Filter könnten je nach den in den Kammern vorhandenen Substanzen ausgebildet sein. So sind bei der Verwendung von Kaffeepulver als Substanz insbesondere papierartige Filter denkbar, ebenso ist jedoch auch eine siebartige Ausführung des Filters denkbar. Dadurch, dass jeder der Kammern ein eigener Filter zugeordnet ist, kann die Ausgestaltung des Filters an die in der jeweiligen Kammer enthaltene Substanz angepasst werden, so dass eine optimale Filterwirkung bei gleichzeitiger Gewährleistung der gewünschten Durchflussmenge oder Durchflussgeschwindigkeit für jede Substanz separat gewählt werden kann. Vorteilhafterweise sind die Filter in den jeweiligen Kammerboden integriert.

In einer vorteilhaften Ausgestaltung ist die zweite Kammer über den ersten Filter mit der ersten Kammer verbunden. Flüssigkeit kann somit aus der ersten Kammer durch den Filter in die zweite Kammer gelangen, so dass die über den Einlaufverschluss in die Kapsel eingebrachte Flüssigkeit zunächst die erste Substanz in der ersten Kammer durchdringt, anschließend durch den ersten Filter in die zweite Kammer gelangt und dort die zweite Substanz durchdringt, so dass eine sequentielle Zubereitung eines flüssigen Lebensmittels mit zwei oder mehr Substanzen möglich ist.

Hierbei ist es insbesondere vorteilhaft, wenn der Filter am Boden der ersten Kammer angeordnet ist und die zweite Kammer unter der ersten Kammer angeordnet ist.

Wie vorhergehend beschrieben, ermöglicht die vorteilhafte Ausgestaltung der erfindungsgemäßen Kapsel mit zwei Einlaufverschlüssen das separate Zuführen von Flüssigkeit in die erste und die zweite Kammer, so dass sowohl Zeitpunkt, als auch Art und physikalische Eigenschaft der zugeführten Flüssigkeit (wie zum Beispiel die Temperatur oder der Aggregatzustand) für jede Kammer separat gewählt werden können.

Eine Vorrichtung zur Verwendung der erfindungsgemäßen_Kapsel weist einen Flüssigkeitsbehälter, mindestens einen Pumpe, mindestens einen ersten Einlaufanschluss und eine Aufnahme für eine Kapsel mit mindestens einem ersten Einlaufverschluss auf. Die Vorrichtung ist derart ausgeführt, dass mittels der Pumpe Flüssigkeit aus dem Behälter zu dem ersten Einlaufanschluss zuführbar ist.

Wesentlich ist, dass die Vorrichtung mindestens einen zweiten Einlaufanschluss aufweist und derart ausgeführt ist, dass Flüssigkeit aus dem Flüssigkeitsbehälter zu dem zweiten Einlaufanschluss zuführbar ist. Die Aufnahme der erfindungsgemäßen Vorrichtung ist für eine Kapsel mit zwei Einlaufverschlüssen geeignet ausgestaltet. Wird eine Kapsel mit zwei Einlaufverschlüssen in die Aufnahme eingelegt, so liegt der erste Einlaufanschluss an dem ersten Einlaufverschluss der Kapsel und der zweite Einlaufanschluss an dem zweiten Einlaufverschluss der Kapsel an.

Mit dieser Vorrichtung kann somit eine erfindungsgemäße Kapsel mit zwei Einlaufverschlüssen wahlweise an jedem der Einlaufanschlüsse mit Flüssigkeit beaufschlagt werden.

Mit dieser Vorrichtung ist somit wahlweise ein sequenzielles Erzeugen von flüssigem Lebensmittel mit der ersten und der zweiten Substanz möglich. Ebenso können für die erste und die zweite Substanz unterschiedliche Eigenschaften der zugeführten Flüssigkeit, beispielsweise des aufgewendeten Drucks, mit dem die Flüssigkeit zugeführt wird, der Temperatur der Flüssigkeit oder des Aggregatszustandes der Flüssigkeit vorgegeben werden, so kann insbesondere die Flüssigkeit wahlweise als Dampf zugeführt werden.

In einer vorteilhaften Ausgestaltung weist die Vorrichtung eine Ventileinheit auf, welche druckseitig mit der Pumpe verbunden ist. Die Ventileinheit ist außerdem sowohl mit dem ersten, als auch mit dem zweiten Einlaufanschluss verbunden, so dass mittels der Ventileinheit wahlweise Flüssigkeit mittels der Pumpe zu dem ersten oder zu dem zweiten Einlaufanschluss zuführbar ist. Insbesondere ist es vorteilhaft die Ventileinheit derart auszuführen, dass auch gleichzeitig zu beiden Einlaufanschlüssen Flüssigkeit zuführbar ist.

In einer weiteren vorteilhaften Ausgestaltungen weist die Vorrichtung einen Erhitzer und einen Dampferzeuger auf, welche jeweils mit der Pumpe und der Ventileinheit verbunden sind. Die Ventileinheit ist derart ausgeführt, dass jeder der Einlaufanschlüsse wahlweise mit erhitzter Flüssigkeit oder mit Dampf beaufschlagt werden kann. Hierdurch kann beispielsweise die erste Kammer einer erfindungsgemäßen Kapsel mit heißem Wasser zur Erzeugung von Kaffee und die zweite Kammer mit Wasserdampf zur Erzeugung von Milchschaum beaufschlagt werden.

Weitere vorteilhafte Ausgestaltungen der Erfindung werden im Folgenden anhand der in den Figuren dargestellten Ausführungsbeispiele erläutert. Dabei zeigt:
Figur 1 eine Kapsel im Querschnitt, mit zwei übereinander liegenden Kammern, die nacheinander von der Flüssigkeit durchdrungen werden,
Figur 2 eine Kapsel im Querschnitt, mit zwei übereinander liegenden Kammern, welche gleichzeitig von der Flüssigkeit durchdrungen werden,
Figur 3 eine Kapsel mit zwei Einlaufverschlüssen und einem Auslaufverschluss, sowie eine Auslauföffnung,
Figur 3a eine Draufsicht von oben auf die in Figur 3 dargestellt Kapsel,
Figur 4 eine erfindungsgemäße Kapsel im Querschnitt, mit zwei Einlaufverschlüssen, zwei Auslaufverschlüssen und einer Auslauföffnung,
Figur 5 eine Kapsel im Querschnitt, mit zwei Einlaufverschlüssen und zwei nebeneinanderliegenden Kammern,
Figur 5a eine Kapsel gemäß Figur 5 im Querschnitt, jedoch mit zwei Auslaufverschlüssen und zwei Auslauföffnungen und
Figur 5b eine Draufsicht von oben auf die in Figur 5 und Figur 5a dargestellten Kapseln.

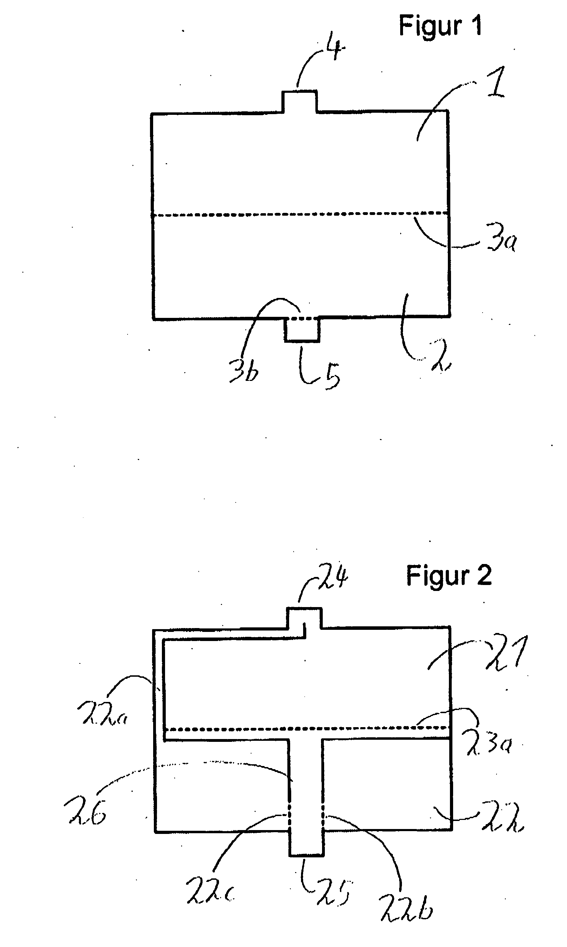

Die in Figur 1 dargestellte Kapsel weist einen in etwa mittig angeordneten siebartigen Filter 3a auf, welcher die Kapsel in eine erste obere Kammer 1 und eine zweite untere Kammer 2 aufteilt. Die erste Kammer 1 ist mit einer ersten Substanz und die zweite Kammer 2 mit einer zweiten Substanz gefüllt. An der Oberseite weist die Kapsel in etwa mittig einen Einlaufverschluss 4 auf. Dieser Einlaufverschluss ist derart ausgebildet, dass er mechanisch mittels eines Aufstechelementes geöffnet werden kann.

An der Unterseite weist die Kapsel einen Auslaufverschluss 5 auf, welcher derart ausgebildet ist, dass er mittels Druck geöffnet werden kann.

Bei Benutzung der Kapsel wird durch Aufstechen des Einlaufverschlusses 4 heißes Wasser in die erste Kammer 1 eingeführt, welches die erste Substanz durchdringt. Anschließend durchdringt das durch die erste Substanz angereicherte heiße Wasser den Filter 3a, welcher jedoch ein Eindringen der ersten Substanz in die zweite Kammer 2 verhindert. In der zweiten Kammer 2 wird das heiße Wasser zusätzlich noch durch die zweite Substanz angereichert. Unmittelbar über dem Auslaufverschluss 5 befindet sich ein zweiter Filter 3b, welcher ein Austreten der zweiten Substanz verhindert.

Aufgrund des mit Druck eingeführten heißen Wassers öffnet sich der Auslaufverschluss 5, so dass das erzeugte flüssige Lebensmittel durch den zweiten Filter 3b an der sich am Auslaufverschluss 5 befindlichen Auslauföffnung ausgegeben wird.

In Figur 2 ist ein Ausführungsbeispiel einer Kapsel dargestellt, bei dem die Kapsel ebenfalls in eine obere Kammer 21, sowie eine untere Kammer 22 aufgeteilt ist. Die Kapsel weist ferner eine Auslaufkammer 26 auf, welche von der zweiten Kammer 22 ringartig umgeben ist. Über einen Einlaufverschluss 24 wird Flüssigkeit in die Kapsel eingeführt. Die Flüssigkeit gelangt in etwa gleichzeitig in die erste Kammer 21 und über eine Zuleitung 22a zu der zweiten Kammer 22. Die erste Kammer 21 ist mittels eines Filters 23a von der Auslaufkammer 26 getrennt, so dass die erste Substanz nicht in die Auslaufkammer 26 gelangen kann. Ebenso ist die zweite Kammer 22 durch Filter 22b und 22c von der Auslaufkammer getrennt, so dass auch die zweite Substanz nicht in die Auslaufkammer eindringen kann.

Wird nun über den Einlaufverschluss 24 Flüssigkeit zugeführt, so durchdringt diese Flüssigkeit zum einen die erste Substanz in der ersten Kammer 21 und zum anderen die zweiten Substanz in der zweiten Kammer 22, tritt anschließend durch die Filter 23a, 22c und 22b in die Auslaufkammer 26 ein und gelangt zum Auslaufverschluss 25, welcher ebenfalls derart ausgeführt wird, dass er mittels der unter Druck eingeführten Flüssigkeit geöffnet wird, so dass der als Auslauföffnung fungierende Auslaufverschluss 25 sowohl die mit der ersten Substanz angereicherte als auch die mit der zweiten Substanz angereicherte Flüssigkeit ausgibt.

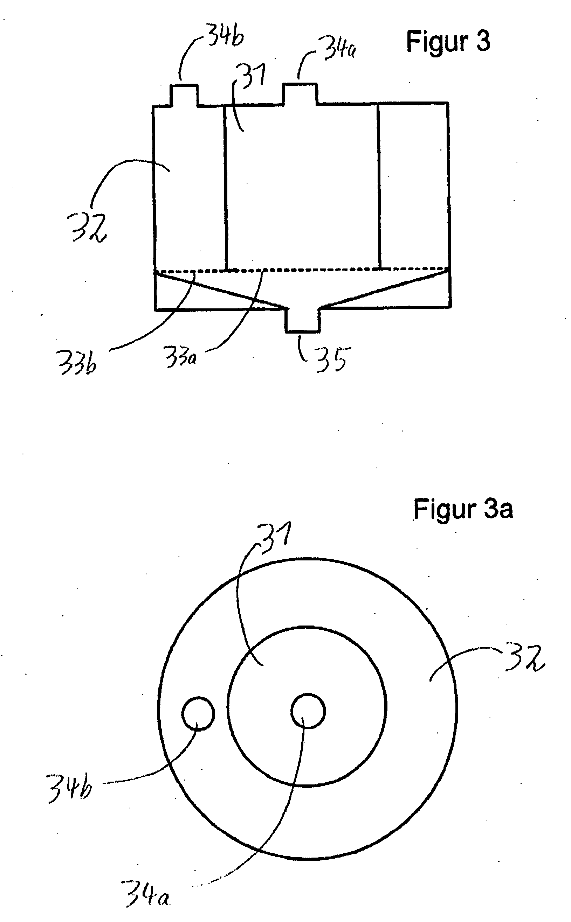

In Figur 3 ist eine Kapsel dargestellt, bei der die Kammern nebeneinander angeordnet sind:

Eine erste Kammer 31 ist mittig angeordnet und hier kann über einen ersten Einlaufverschluss 34a Flüssigkeit zugeführt werden. Ringförmig die erste Kammer 31 umgebend ist eine zweite Kammer 32 ausgebildet, zu der über einen zweiten Einlaufverschluss 34b Flüssigkeit zugeführt werden kann.

In der in Figur 3a dargestellten Draufsicht von oben auf die in Figur 3 in Querschnitt dargestellte Kapsel ist die in etwa konzentrische Anordnung der ersten Kammer 31, sowie der zweiten Kammer 32 und die Anordnung der Einlaufverschlüsse 34a und 34b ersichtlich.

Wie in Figur 3 dargestellt, weisen sowohl die erste Kammer 31, als auch die zweite Kammer 32 bodenseitig Filter 33a und 33b auf, wobei der Filter 33b ebenfalls ringförmig ausgebildet ist. Unterhalb der Filter ist ein trichterförmiges Auslaufelement angeordnet, welches in einem Auslaufverschluss 35 mündet.

Bei Benutzung der in den Figuren 3 und 3a dargestellten Kapsel wird sowohl der Einlaufverschluss 34a, als auch der Einlaufverschluss 34b jeweils von einer Aufstechnadel durchstochen, so dass in die erste Kammer 31 und die zweite Kammer 32 unabhängig voneinander Flüssigkeit zugeführt werden kann. Die Flüssigkeit tritt anschließend durch die Siebe 33a und 33b hindurch und gelangt über das trichterförmige Auslaufelement zu dem Auslaufverschluss 35, welcher ebenfalls aufgrund der Druckbeaufschlagung durch die Flüssigkeit geöffnet wird und als Auslauföffnung fungiert.

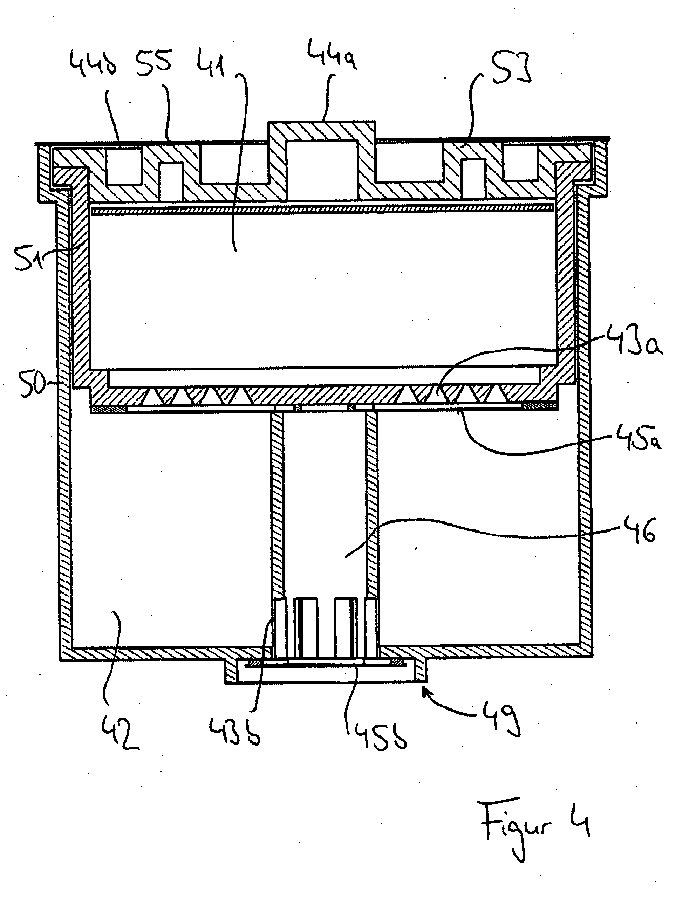

In Figur 4 ist schließlich eine ebenfalls im Wesentlichen zylindrisch ausgeführte Kapsel mit zwei Einlaufverschlüssen dargestellt, bei der jedoch die beiden Kammern übereinander angeordnet sind:

Eine erste Kammer 41 mit einem ersten Einlaufverschluss 44a ist über einer zweiten Kammer 42 mit einem zweiten Einlaufverschluss 44b angeordnet. Der zweite Einlaufverschluss 44b ist über ein (nicht dargestelltes) Leitungssystem mit der zweiten Kammer 42 verbunden.

Die in Figur 4 dargestellte Kapsel weist ferner eine Auslaufkammer 46 auf, welche ringförmig von der zweiten Kammer 42 umgeben ist. Die Auslaufkammer 46, sowie die in Figur 4 dargestellte Kapsel sind im Wesentlichen zylindrisch ausgeführt.

Die erste Kammer 41 weist einen in den Boden der Kammer integrierten ersten Filter 43a auf, welcher ringförmig ausgebildet ist, so dass im Zentrum des Bodens ein nicht flüssigkeitsdurchlässiger kreisförmiger Bereich ausgebildet ist.

Unterhalb dieses kreisförmigen Bereiches ist die Auslaufkammer 46 angeordnet, wobei zwischen Auslaufkammer 46 und erstem Filter 43a ein als Folie ausgebildeter erster Auslaufverschluss 45a angeordnet ist. Diese Folie ist ringförmig im Randbereich mit dem Boden der ersten Kammer 41 verschweißt. Mittig weist die Folie eine Lochung auf, welche über der Auslaufkammer 46 angeordnet ist. Im Randbereich dieser Lochung ist die Folie mit dem Boden der ersten Kammer 41 verschweißt, wobei diese in etwa ringförmige Schweißung eine oder mehrere Schwächungen aufweist. Wird nun in die erste Kammer 41 unter Druck stehende Flüssigkeit zugeführt, so tritt die Flüssigkeit durch den ersten Filter 43a hindurch und löst die Folie im Randbereich der Lochung vom Boden der ersten Kammer ab, so dass die Flüssigkeit aus der ersten Kammer 41 in die Auslaufkammer 46 eintreten kann. Im Randbereich der Folie ist die Schweißung zwischen Folie und Boden der Kammer jedoch derart ausgeführt, dass keine Ablösung erfolgt. Die Folie stellt somit den ersten Auslaufverschluss 45a dar.

Über den zweiten Einlaufverschluss 44b wird Flüssigkeit zu der zweiten Kammer 42 zugeführt. Diese Kammer umgibt ringförmig die Auslaufkammer 46, wobei im unteren Bereich der Auslaufkammer 46 filterartige Öffnungen vorgesehen sind, so dass sich ein zweiter Filter 43b ergibt, durch den Flüssigkeit aus der zweiten Kammer 42 in die Auslaufkammer 46 eintreten kann. Im Bodenbereich der Auslaufkammer 46 ist ein zweiter als Folie ausgebildeter Auslaufverschluss 45b angeordnet.

Auch diese Folie ist ringförmig am äußeren Rand der Folie mit dem Boden der zweiten Kammer 42 verschweißt, derart, dass die ringförmige Schweißung eine oder mehr Schwächungen aufweist, so dass unter Druck eine Ablösung der Folie von dem Boden der zweiten Kammer 42 erfolgt. Befindet sich in der Auslaufkammer 46 unter Druck stehende Flüssigkeit, so wird der als Folie ausgebildete zweite Auslaufverschluss 45b somit geöffnet und die Flüssigkeit tritt an der Auslauföffnung 49 aus der Kapsel aus.

Das in Figur 4 dargestellte vorteilhafte Ausführungsbeispiel der erfindungsgemäßen Kapsel weist den Vorteil auf, dass einerseits mittels zweier Einlaufverschlüsse 44a und 44b individuell zu jeder Kammer Flüssigkeit zugeführt werden kann und andererseits die Kammer 41 in etwa dem Aufbau einer herkömmlichen Kapsel zur Herstellung von Kaffee entspricht, so dass hinsichtlich Höhen-Breitenverhältnis der Kammer und Ausgestaltung des ersten Filters 43a bereits bekannte Ausgestaltungen übernommen werden können.

Weiterhin zeichnet sich die in Figur 4 dargestellte Kapsel durch einen einfachen und robusten Aufbau aus, denn die Kapsel besteht aus einem äußeren Behälter 50, der im Wesentlichen zylindrisch ausgebildet ist. In diesen äußeren Behälter 50 ist ein innerer Behälter 51 eingesetzt. Vorteilhafterweise ist der innere Behälter mit dem äußeren Behälter 50 verschweißt. Der innere Behälter 51 weist bodenseitig wie beschrieben den integrierten ersten Filter 43a, sowie den Auslaufverschluss 45a auf und teilt somit das Volumen des Behälters 50 in erste Kammer 41 und zweite Kammer 42 auf. In dem ersten Behälter 50 ist mittig die Auslaufkammer 46 ausgebildet. Zwischen dem äußeren und dem inneren Behälter befinden sich (nicht dargestellte) Kanäle, welche ein Durchleiten der Flüssigkeit vom zweiten Einlaufverschluss 44b zu der zweiten Kammer 42 ermöglichen.

Schließlich ist die Kapsel oben durch einen Deckel 53 verschlossen, welcher sowohl den ersten Einlaufverschluss 44a, als auch den zweiten Einlaufverschluss 44b aufweist. Eine ringförmige Folie 55 bedeckt Deckel und Kapselrand und ist mit diesen verschweißt. Die Folie 55 bildet zusammen mit dem Deckel den zweiten Einlaufverschluss 44b.

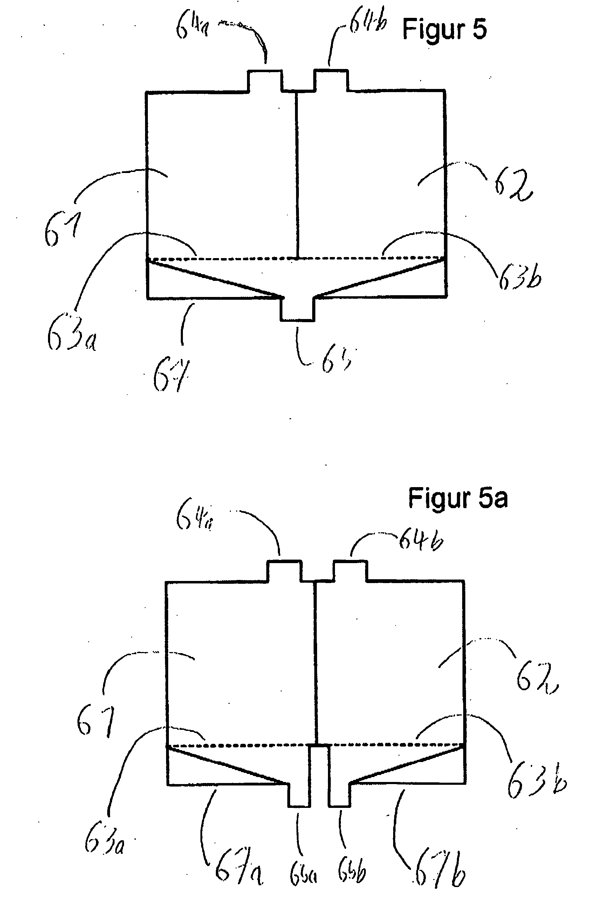

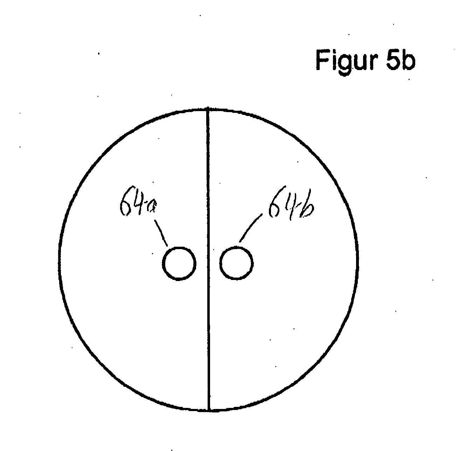

In Figur 5 ist ein weiteres Ausführungsbeispiel der Kapsel dargestellt, bei dem die Kapsel eine erste Kammer 61 und eine im Querschnitt daneben angeordnete zweite Kammer 62 aufweist.

Die Kapsel besitzt einen ersten Einlaufverschluss 64a und einen zweiten Einlaufverschluss 64b über die jeweils Flüssigkeit zu der ersten Kammer 61 oder der zweiten Kammer 62 zugeführt werden kann.

Im Boden der beiden Kammern ist ein erster Filter 63a beziehungsweise ein zweiter Filter 63b integriert. Aus beiden Kammern tritt Flüssigkeit durch die beiden Filter 63a und 63b in ein gemeinsames Auslaufelement 67, welches in einem gemeinsamen Auslaufverschluss 65 mündet, der sich - wie oben beschrieben - unter Druck öffnet und als Auslaufsöffnung fungiert.

Figur 5a stellt eine vorteilhafte Variante der in Figur 5 dargestellten Kapsel dar. Auch die in Figur 5a dargestellte Kapsel weist einen ersten Einlaufverschluss 64a, einen zweiten Einlaufverschluss 64b, eine erste Kammer 61, eine zweite Kammer 62, einen ersten Filter 63a und einen zweiten Filter 63b auf.

Im Gegensatz zu der in Figur 5 dargestellten Kapsel sind hier im unteren Bereich der Kapsel jedoch zwei Auslaufelemente 67a und 67b angeordnet, welche jeweils einen Auslaufverschluss (65a und 65b) aufweisen.

Bei dieser Kapsel erfolgt die Ausgabe der Flüssigkeit der ersten Kammer somit aus dem als erste Auslauföffnung fungierenden ersten Auslaufverschluss 65a, wohingegen die Flüssigkeit aus der zweiten Kammer 62 aus dem als zweiter Auslauföffnung fungierenden Auslauföffnung fungierenden Auslaufverschluss 65b ausgegeben wird.

Hierdurch können die Auslaufverschlüsse für die in der zugehörigen Kammer gelagerten Substanz hinsichtlich der Größe und des Druckes, der zur Öffnung des Auslaufverschlusses notwendig ist, angepasst werden.

Ebenso ist es möglich, unter der Kapsel zwei Gefäße wie beispielsweise zwei Tassen anzuordnen, so dass die Flüssigkeit aus der ersten Kammer in das erste Gefäß und die Flüssigkeit aus der zweiten Kammer in das zweite Gefäß ausgegeben wird.

In Figur 5b ist schließlich eine Draufsicht auf die in Figur 5 und Figur 5a dargestellten Kapseln gezeigt. Die Kapseln besitzen einen im Wesentlichen zylindrischen Aufbau und die Trennwand zwischen den beiden Kammern verläuft in etwa mittig, so dass beide Kammern in etwa das gleiche Volumen besitzen. Ebenso ist es jedoch auch denkbar, die Trennwand derart anzuordnen, dass unterschiedliche Volumina bei den beiden Kammern vorliegen.

## Patentansprüche

1. Kapsel für eine Vorrichtung zur Erzeugung von flüssigen Lebensmitteln, insbesondere für Kaffeemaschinen,
wobei in der Kapsel mindestens eine erste Kammer (1, 21, 31, 41, 61) zur Aufnahme einer ersten Substanz zur Herstellung des flüssigen Lebensmittels ausgebildet ist und
die Kapsel mindestens einen ersten Filter (3a, 23a, 33a, 43a, 63a), mindestens einen ersten Einlaufverschluss (4, 24, 34a, 44a, 64a) und mindestens einen ersten Auslaufverschluss (5, 25, 35, 45a, 65, 65a) aufweist, welche derart angeordnet sind, dass über den ersten Einlaufverschluss Flüssigkeit in die erste Kammer zuführbar und aus der ersten Kammer durch den ersten Filter Flüssigkeit über den ersten Auslaufverschluss abführbar ist und **dass** in der Kapsel mindestens eine zweite Kammer (2, 22, 32, 42, 62) zur Aufnahme einer zweiten Substanz ausgebildet ist,
**dadurch gekenntzeichnet,**
- **dass** die erste Kammer (21, 41) über der zweiten Kammer (22, 42) angeordnet ist und
dass die Kapsel eine Auslaufkammer (26, 46) mit einer Auslauföffnung umfasst, wobei die Auslaufkammer an der zweiten Kammer angeordnet oder die zweite Kammer hinsichtlich ihrer Höhe durchdringend angeordnet ist, derart, dass Flüssigkeit aus der ersten und aus der zweiten Kammer in die Auslaufkammer abführbar ist und von der Auslaufkammer über die Auslauföffnung aus der Kapsel ausführbar ist,
- dass die Kapsel mindestens einen zweiten Auslaufverschluss (45b, 65b) aufweist, welcher mit der zweiten Kammer (42, 62) verbunden und derart angeordnet ist, dass Flüssigkeit aus der zweiten Kammer über den zweiten Auslaufverschluss abführbar ist und
dass die Kapsel eine Auslauföffnung aufweist und der erste und der zweite Auslaufverschluss mit der Auslauföffnung verbunden sind.

2. Kapsel nach Anspruch 1,
**dadurch gekennzeichnet,**
**dass** die zweite Kammer (2, 22) mit dem ersten Einlaufverschluss (4, 24) verbunden ist, derart, dass über den ersten Einlaufverschluss sowohl Flüssigkeit in die erste Kammer (1, 21), als auch in die zweite Kammer (2, 22) zuführbar ist.

3. Kapsel nach Anspruch 1,
**dadurch gekennzeichnet,**
**dass** die Kapsel mindestens einen zweiten Einlaufverschluss (34b, 44b, 64b) aufweist, welcher mit der zweiten Kammer (32, 42, 62) verbunden und derart angeordnet ist, dass über den zweiten Einlaufverschluss (34b, 44b, 64b) Flüssigkeit in die zweite Kammer (32, 42, 62) zuführbar ist.

4. Kapsel nach einem der vorangegangenen Ansprüche,
**dadurch gekennzeichnet,**
**dass** die zweite Kammer (2, 22, 32, 42, 62) mit dem ersten Auslaufverschluss (5, 25, 35, 45, 65) verbunden ist, derart, dass sowohl aus der ersten Kammer (1, 21, 31, 41, 61), als auch aus der zweiten Kammer Flüssigkeit über den ersten Auslaufverschluss abführbar ist.

5. Kapsel nach Anspruch nach einem der vorangegangenen Ansprüche,
**dadurch gekennzeichnet,**
**dass** die Kapsel mindestens eine erste und eine hiervon beabstandete zweite Auslauföffnung aufweist, wobei der erste Auslaufverschluss mit der ersten Auslauföffnung und der zweite Auslaufverschluss mit der zweiten Auslauföffnung verbunden ist.

6. Kapsel nach mindestens einem der vorangegangen Ansprüche,
**dadurch gekennzeichnet,**
**dass** die Kapsel mindestens einen zweiten Filter (3b, 22c, 22b, 33b, 43b, 63b) aufweist, welcher derart angeordnet ist, dass aus der zweiten Kammer (2, 22, 32, 42, 62) durch den zweiten Filter Flüssigkeit über einen mit der zweiten Kammer verbundenden Auslaufverschluss (5, 25, 35, 45, 65) abführbar ist.

7. Kapsel nach einem der vorangegangenen Ansprüche,
**dadurch gekennzeichnet,**
**dass** die zweite Kammer (2) über den ersten Filter (3a) mit der ersten Kammer (1) verbunden ist, derart, dass Flüssigkeit aus der ersten Kammer durch den Filter in die zweite Kammer einführbar ist, insbesondere, dass der Filter im Boden der ersten Kammer angeordnet ist und die zweite Kammer unter der ersten Kammer angeordnet ist.

## Claims

1. Capsule for a device for generating liquid foodstuffs, especially for coffee machines,
there being formed in the capsule at least one first chamber (1, 21, 31, 41, 61) for receiving a first substance for producing the liquid foodstuff and
the capsule having at least one first filter (3a, 23a, 33a, 43a, 63a), at least one first inlet closure (4, 24, 34a, 44a, 64a) and at least one first outlet closure (5, 25, 35, 45a, 65, 65a), which are arranged in such a way that liquid is suppliable to the first chamber by way of the first inlet closure and from the first chamber, through the first filter, liquid is dischargeable by way of the first outlet closure and there is formed in the capsule at least one second chamber (2, 22, 32, 42, 62) for receiving a second substance,
**characterised in that**
- the first chamber (21, 41) is arranged above the second chamber (22, 42) and
- the capsule comprises an outlet chamber (26, 46) having an outlet opening, the outlet chamber being arranged at the second chamber or being arranged to pass through the second chamber in respect of its height in such a way that liquid from the first chamber and from the second chamber is dischargeable into the outlet chamber and from the outlet chamber is dischargeable from the capsule by way of the outlet opening,
and/or
- the capsule has at least one second outlet closure (45b, 65b) which is connected to the second chamber (42, 62) and is arranged in such a way that liquid from the second chamber is dischargeable by way of the second outlet closure and
- the capsule has an outlet opening and the first and the second outlet closures are connected to the outlet opening.

2. Capsule according to claim 1,
**characterised in that**
the second chamber (2, 22) is connected to the first inlet closure (4, 24) in such a way that, by way of the first inlet closure, liquid is suppliable both to the first chamber (1, 21) and to the second chamber (2, 22).

3. Capsule according to claim 1,
**characterised in that**
the capsule has at least one second inlet closure (34b, 44b, 64b) which is connected to the second chamber (32, 42, 62) and is arranged in such a way that, by way of the second inlet closure (34b, 44b, 64b), liquid is suppliable to the second chamber (32, 42, 62).

4. Capsule according to any one of the preceding claims, **characterised in that**
the second chamber (2, 22, 32, 42, 62) is connected to the first outlet cloture (5, 25, 35, 45, 65) in such a way that liquid is dischargeable by way of the first outlet closure both from the first chamber (1, 21, 31, 41, 61) and from the second chamber.

5. Capsule according to any one of the preceding claims, **characterised in that**
the capsule has at least one first outlet opening and, arranged spaced apart therefrom, a second outlet opening, the first outlet closure being connected to the first outlet opening and the second outlet closure being connected to the second outlet opening.

6. Capsule according to at least one of the preceding claims, **characterised in that**
the capsule has at least one second filter (3b, 22c, 22b, 33b, 43b, 63b) which is arranged in such a way that from the second chamber (2, 22, 32, 42, 62), through the second filter, liquid is dischargeable by way of an outlet closure (5, 25, 35, 45, 65) connected to the second chamber.

7. Capsule according to any one of the preceding claims, **characterised in that**
the second chamber (2) is connected by way of the first filter (3a) to the first chamber (1) in such a way that liquid from the first chamber is introducible into the second chamber through the filter, the filter especially being arranged in the base of the first chamber and the second chamber specially being arranged below the first chamber.

## Revendications

1. Capsule destinée à un dispositif de production d'aliments liquides, notamment à des machines à café,
une première chambre (1, 21, 31, 41, 61), conçue pour recevoir une première substance en vue de l'élabaration de l'aliment liquide, étant ménagée dans ladite capsule, et
ladite capsule comprenant au moins un premier filtre (3a, 23a, 33a, 43a, 63a), au moins une première obturation d'entrée (4, 24, 34a, 44a, 64a) et au moins une première obturation de sortie (5, 25, 35, 45a, 65, 65a) qui sont disposés de façon telle que du liquide puisse être admis dans la première chambre par l'intermédiaire de ladite première obturation d'entrée, et puisse être évacué de ladite première chambre par l'intermédiaire de ladite première obturation de sortie, en traversant ledit premier filtre, et
au moins une seconde chambre (2, 22, 32, 42, 62), conçue pour recevoir une seconde substance, étant ménagée dans ladite capsule,
**caractérisée par le fait**
- **que** la première chambre (21, 41) est placée au-dessus de la seconde chambre (22, 42), et
**que** ladite capsule présente une chambre de sortie (26, 46) dotée d'un orifice de sortie, ladite chambre de sortie étant implantée sur la seconde chambre, ou agencée pour traverser ladite seconde chambre dans le sens de sa hauteur, de telle sorte que du liquide puisse être évacué dans ladite chambre de sortie en provenance desdites première et seconde chambres, et déchargé de ladite capsule à partir de ladite chambre de sortie, en empruntant ledit orifice de sortie,
et/ou
- **que** ladite capsule comporte au moins une seconde obturation de sortie (45b, 65b) reliée à la seconde chambre (42, 62) et disposée de façon telle que du liquide puisse être évacué de ladite seconde chambre par l'intermédiaire de ladite seconde obturation de sortie, et
**que** ladite capsule est munie d'un orifice de sortie, les première et seconde obturations de sortie étant reliées audit orifice de sortie.

2. Capsule selon la revendication 1,
**caractérisée par le fait**
**que** la seconde chambre (2, 22) est reliée à la première obturation d'entrée (4, 24) de façon telle que du liquide puisse être admis, par l'intermédiaire de ladite première obturation d'entrée, tant dans la première chambre (1, 21) que dans ladite seconde chambre (2, 22).

3. Capsule selon la revendication 1,
**caractérisée par le fait**
**que** ladite capsule est pourvue d'au moins une seconde obturation d'entrée (34b, 44b, 64b) reliée à la seconde chambre (32, 42, 62), et disposée de façon telle que du liquide puisse être admis dans ladite seconde chambre (32, 42, 62) par l'intermédiaire de ladite seconde obturation d'entrée (34b, 44b, 64b).

4. Capsule selon l'une des revendications précédentes,
**caractérisée par le fait**
**que** la seconde chambre (2, 22, 32, 42, 62) est reliée à la première obturation de sortie (5, 25, 35, 45, 65) de façon telle que du liquide puisse être évacué tant à partir de la première chambre (1, 21, 31, 41, 61) qu'à partir de ladite seconde chambre, par l'intermédiaire de ladite première obturation de sortie.

5. Capsule selon l'une des revendications précédentes,
**caractérisé par le fait**
**que** ladite capsule comprend au moins un premier orifice de sortie, et un second orifice de sortie situé à distance de ce dernier, la, première obturation de sortie étant reliée audit premier orifice de sortie, et la seconde obturation de sortie étant reliée audit second orifice de sortie.

6. Capsule selon au moins l'une des revendications précédentes,
**caractérisée par le fait**
**que** ladite capsule est dotée d'au moins un second filtre (3b, 22c, 22b, 33b, 43b, 63b) disposé de façon telle que du liquide puisse être évacué de la seconde chambre (2, 22, 32, 42, 62), en traversant ledit second filtre, par l'intermédiaire d'une obturation de sortie (5, 25, 35, 45, 65) reliée à ladite seconde chambre.

7. Capsule selon l'une des revendications précédentes,
**caractérisée par le fait**
**que** la seconde chambre (2) est reliée à la première chambre (1) par l'intermédiaire du premier filtre (3a), de façon telle que du liquide puisse être admis dans ladite seconde chambre à partir de ladite première chambre, en traversant ledit filtre ; notamment que ledit filtre est logé dans le fond de ladite première chambre, et que ladite seconde chambre est placée au-dessous de ladite première chambre.
